# EUROPEAN PATENT SPECIFICATION

(11) **EP 2 871 923 B1**
(45) Date of publication and mention of the grant of the patent: **08.04.2020**
(21) Application number: 13820570.3
(22) Date of filing: 16.07.2013
(51) Int. Cl.: A01B 29/04, A01B 35/16, A01B 49/02, A01B 21/04

(54) **AGRICULTURAL MACHINE**
LANDWIRTSCHAFTSMASCHINE
MACHINE AGRICOLE

(30) Priority: 16.07.2012 SE 1250856
(43) Date of publication of application: 20.05.2015
(73) Proprietor: Väderstad Holding AB, 590 21 Väderstad (SE)
(72) Inventor: STARK, Crister, S-590 21 Väderstad (SE); PREJER, Gustav, 432 45 Varberg (SE)
(74) Representative: Keijser Bergöö, Malin Katarina
(86) International application number: PCT/SE2013/050908
(87) International publication number: WO 2014/014402

(56) References cited:
- WO-A1-2012/093958
- WO-A1-2012/093958
- US-A- 114 127
- US-A- 443 349
- US-A- 489 047
- US-A- 1 880 584
- US-A- 2 553 356
- US-A- 2 574 468
- US-A- 2 654 982
- US-A- 4 033 270
- US-A- 4 033 270
- US-A1- 2005 077 060

## Description

The invention refers to an agricultural machine according to the pre-characterising portion of Claim 1.

### TECHNICAL AREA

Roller cutters have been used to a limited extent in agriculture for a long time. A roller cutter (in American English 'stalk cutter") is a type of implement or part of an implement which has existed in North America for a long time. The first were horse-drawn and intended to cut up and till down tobacco plants. A later application is shown in Swedish patent application no. 1150003-0, where a roller cutter is combined with a machine with discs and press assemblies, whereby new results are created. This machine gives the farmer the possibility to till down standing stubble and at the same time till or cultivate the field with the discs of the machine. This is a particularly effective combination. A problem, however, is that owing to irregularities in the field the machine carries out cultivation to different depths.

Other agricultural machines of the type described above are known through US 4033270 which describes a roller cutter assembly according to the pre-characterising portion of Claim 1 and comprises two rows of roller cutter segments, within each of which roller cutter segments are alternate cutter knives facing opposite directions, through US 4,884,391, which shows and describes an agricultural machine comprising a roller cutter assembly with coulters arranged behind, and through US 4,150,724, which refers to a roller cutter assembly comprising roller cutter sections in double rows mounted on a frame.

Modern agriculture sees a need for more efficiently tilling down stubble, primarily of oilseeds and maize but also cereals. This is of relevance since stubble and other harvest residues have become increasingly abundant with rising yield levels and since the demands of farmers have strengthened such that through a very shallow cultivation they wish to incorporate all stubble and achieve efficient mixing of the small amount of soil tilled up with the relatively large amounts of plant residues that are commonly present on a field after harvest. By very shallow soil cultivation is meant here just a few centimetres of soil loosening. This result is difficult to achieve with conventional machines such as a disc implement with following roller implement.

### OBJECT OF THE INVENTION

The object of the invention is to achieve a device at an agricultural machine that eliminates the above-mentioned problems and at the same time gives good breakdown of stubble, straw and other harvest residues.

An additional object is to achieve a device at an agricultural machine that homogeneously cuts and slices up every part of the stubble.

### SUMMARY OF THE INVENTION

These objects are achieved through a device according to the characterising part of Claim 1.

The sub-claims present advantageous embodiments of the device according to the invention.

At certain conditions it would be desirable or appropriate to cultivate the field only with a rolling roller cutter that very efficiently bears down and cultivates every little part of the field, i.e. has a great capacity to adapt to irregularities and variations in the field. When a roller cutter of this type rolls under load over a field at a speed of approx. 15 km/hour a lot of surface soil and a lot of plant residues are vortexed up into the air. All this lands in front of the carrying roller of the machine, which compresses and reconsolidates the soil surface. In so doing, it creates very good conditions for rapid decomposition of harvest residues and good conditions for all new seeds to germinate. Through the homogeneous cutting and slicing of every part of the stubble and every long straw pipe that is present in the field and the simultaneous production of 'fine soil' (small soil particles created through the rolling of the blades and their engagement in the soil), good conditions are obtained for giving spill seed and weeds the best possible conditions for germination.

A machine that usually carries inclined discs on two rows, for example a machine of the so-called 'Carrier' type, which also has at least one support roller for soil reconsolidation and for regulating the working depth of the working members, is instead of discs provided with two rows of rotating mainly cylinder-shaped entities with mainly evenly distributed short rotating blades, the edges of which are directed towards the periphery of the entity. The machine also has at least one following roller for reconsolidation of the soil. This machine constitutes a particularly effective machine for the intended aim.

By arranging the blades so that they rotate inclined, they abrade the soil during the rolling movement. This contributes to loosening of surface soil and to the cutting of plant residues being more effective than if the edges had not abraded the soil, compare with how a food item is cut on a chopping board. The result is thus a machine that can follow the irregularities of the soil in detail and incorporate all standing stubble, cultivate the soil shallowly and with the aid of the following roller reconsolidate and create an optimal environment for weeds to germinate and for breakdown of plant residues.

### DRAWING SUMMARY

The invention is described more precisely below with reference to the attached drawings, which show preferred embodiments.
- Figure 1: shows a partial perspective view from the side of an agricultural machine, which is intended to be drawn by a tractor, comprising a device according to the present invention with two rows of roller cutter entities.
- Figure 2: shows a schematic, partial perspective view from the front of a part of one of the roller cutter entities in Fig. 1 and 2.
- Figure 3: shows a schematic, partial perspective view from the front of a roller cutter segment.

### DESCRIPTION OF PREFERRED EMBODIMENTS

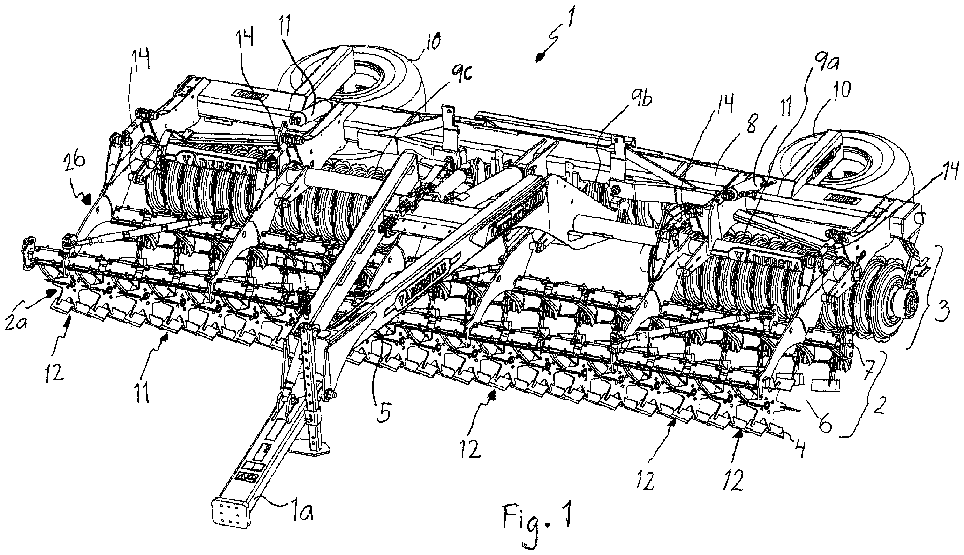

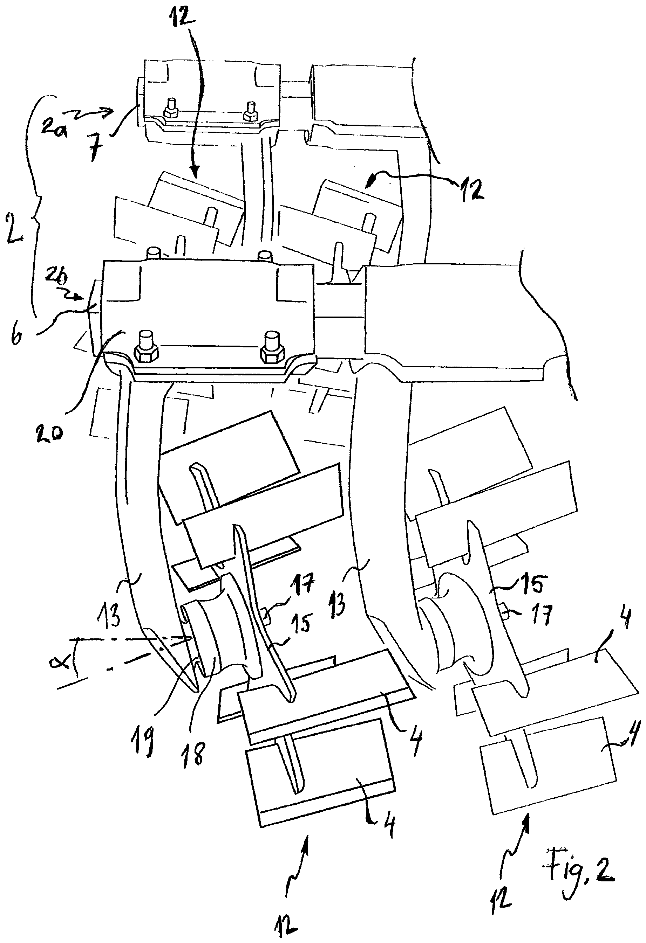

Fig. 1 shows an agricultural machine 1 with a drawbar la, which is coupled to a not shown draught vehicle, such as a tractor, with a device according to the invention comprising among other things implements consisting of a roller cutter assembly 2 and following roller assembly 3. The roller cutter assembly 2 consists of a first row 2a and a following, with the first row 2a parallel row 2b with short knife blades or knives 4, which rows extend in the lateral direction of the machine, wherein the knives 4 in the first row are inclined in one direction and the knives in the second row are inclined in the opposite direction, as can be seen in Fig. 1 and 2.

The agricultural machine 1 is shown in Fig. 1 in a working position, for example in a stubblefield with rape stubble or with residues of other crops appropriate for the machine such as sunflower or maize. A range of other crops also leave a considerable amount of harvest residues which can be dealt with by this implement combination. The machine 1 with the roller cutter assembly 2 can also carry out the work of a soil cultivator in clear soil, i.e. it functions in a multitude of different conditions.

The machine 1 according to Fig. 1 also has a frame 5, which carries two parallel rows of cross-beam entities 6 and 7, each of which is divided into three mutually jointed beam sections, which are folded relative to each other in the conversion to a transport position, and which give good responsiveness when the machine 1 is drawn over a not completely flat arable field. The roller section 3 also consists of three parts, which are suspended in arms connected with a cross-running beam entity 8, which is divided into three mutually jointed sections 9a, 9b, 9c in a corresponding way to the beam sections of the cross-beam entities 6 and 7. Transverse transport wheels 10 are arranged on the rear side sections 9a and 9c of the beam entity 8. The agricultural machine 1 is converted to a transport position in known way through the power apparatus 11 being activated in order to rotate the beam 90° so that the transport wheels come into rolling contact with the soil.

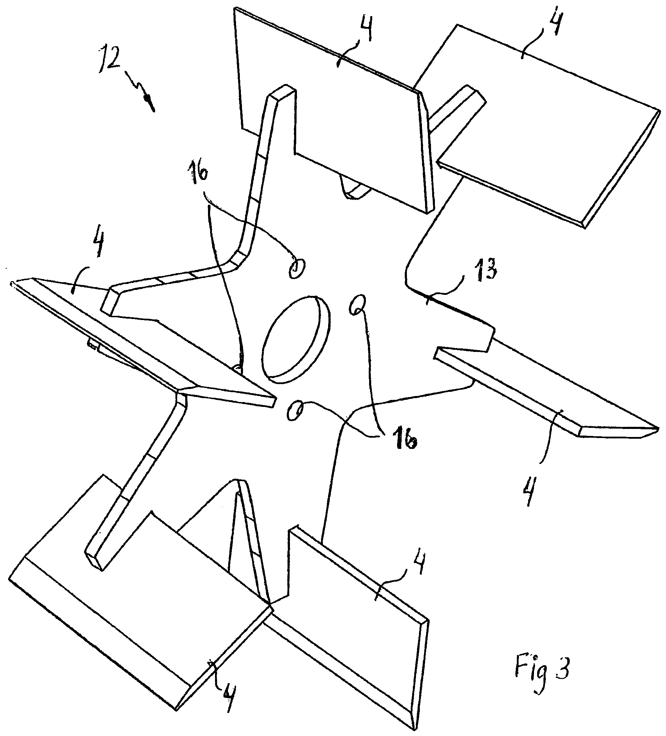

Each roller cutter entity in the roller cutter assembly 2 is along its longitudinal axis provided with short roller cutter segments 12, as can be seen in Fig. 2 and 3. These are so short that they have space between the rubber-suspended arms 13 (c-c is usually 250 mm) of the machine 1. They can then be so long that a little overlap is created. The roller cutter segments 12 roll row-wise inclined an angle a of approx. 5°-20°, preferably approx. 15°. This angle, which can be adjustable, is formed between the longitudinal extension of the beams 6, 7 and the axis of rotation of the roller cutter segments 12. When the machine 1 is drawn over the field, it is obvious that the knives 4 on the roller cutter entities 2 can be engaged towards the soil through power apparatus 14. When the roller cutter entities 2 roll over the soil, a certain incursion is brought about depending on how hard they are engaged and depending on how hard the soil is. It is also obvious that the springing to which each arm is subjected rebounds out a number of degrees depending on how hard each roller cutter entity 2 is engaged. This rebound varies with the soil irregularities when the machine is moved forwards over the soil. Each short roller cutter segment 12 then acquires a very good capacity to follow the irregularities of the soil, for example they can go down into a wheel track or up onto a bump without difficulty. All roller cutter segments 12 work independently of each other within the space allowed by the springing. This space is naturally affected by the user.

Through the device according to the invention a roller cutter assembly, which consists of two rows of roller cutter entities 2a and 2b, is combined with roller cutter segments 12, with at least one separate following reconsolidating roller assembly 3, which reconsolidates the soil for best contact between soil and harvest residues. The following roller aggregate 3 consequently gives very effective total breakdown of the stubble. By arranging the roller cutter assembly 2 and the roller aggregate 3 after each other in the driving direction, the risk of stubble residues and other material being collected up is reduced, which makes the machine more effective.

To achieve a shallow cultivation effectively, the implement should have good responsiveness. This responsiveness becomes very important, since the ambition is to cultivate the soil very shallowly. If a work tool such as in this case a roller cutter assembly 2 is 3 m long in the cross-wise direction and is made rigid in a single piece it cannot follow the irregularities of the soil. If the soil has hollows and humps it is difficult to achieve an even working depth. Therefore, such a tool must be able to adapt itself to the soil as much as is practically possible. According to the invention the roller cutter assembly is thus divided into sections, the axles of which are provided with in the longitudinal direction evenly distributed holders 15, which are provided with in the peripheral direction evenly distributed short knives 4. The relative spacing of the holders 15 along the beams 6 and 7 is 20-60 cm, preferably approx. 40 cm. In a further development the edges of the knife blades 4 are inclined relative to the longitudinal axles of the roller cutter assemblies, which gives an even responsiveness. The holders 15 are screwed fast through holes 16 (see Fig. 3) by means of bolts 17 on hubs 18 which are freely journalled in bearings rotatably on axles 19, which protrude at the lower ends of the arms 13. The axles 19 are at their free ends provided with threaded holes, which accept the bolts 17, which in tightened condition in known way permit free rotation of the holders 15

At the device according to the invention the knife blades 4 on each roller cutter segment 12 are held by knife holders 15, such as press plates or end-plates. As is shown in the drawings each roller cutter segment 12 has six knives 4 evenly distributed along the periphery of the holders 15. This number can naturally be varied within the framework of the attached patent claims. The knives 4 in Fig. 2 and 3 are fastened at the holders 15 offset from the centre line of the knives. However, it can also be advantageous to assemble the knives 4 centred on the holders 15. The knives 4 can be assembled on the holders in different ways. For example they can be welded, screwed fast or riveted. In the two last-named examples a recess must be provided for the fastening. At an alternative embodiment, the knives 4 with holders 15 are casted in one piece. The cutting surfaces of the knives 4 assembled on the fore roller cutter row 2a towards stubble parts or other harvest residues on the field are mainly perpendicular to the cutting surfaces of the knives 4 assembled on the rear and following roller cutter row 2b. This gives effective cultivation of the soil. The roller cutter segments 12 on the beams 6, 7 are arranged mainly after one another in the driving direction with the aim of covering the entire field. This can also be achieved when the roller cutter segments 12 on the beams 6, 7 are assembled a pre-determined distance offset relative to each other in the driving direction.

From Fig. 2 it can also be seen that the device according to the invention comprises suspending devices in the form of elastic suspending apparatus 20, with which the arms 13 of the roller cutter segments 12 are connected. The suspending apparatuses 20, which are suitably provided with not shown, springing, elastic elements, such as rubber rods, are suspended in the beams 6 and 7. The elastic suspending apparatuses 20 with preferably springing rubber elements are arranged for every roller cutter segment 12.

The consolidation rollers 3 of the machine 1, which are arranged after the roller cutter assembly 2 in order to consolidate the soil after the cultivating of the knives 4, can also maintain the machine at a pre-determined depth or alternatively engage the knives against the soil.

The elastic suspending apparatuses 20 provide the possibility to exert a considerable downward directed force on the roller cutter segments 12. Owing to the elastic suspension, the roller cutter segments 12, despite the downward directed force, have a possibility to move themselves in the vertical direction in order to adjust to irregularities in the soil and to spring up if the field has solid obstacles for example in the form of large stones.

The drawings show an agricultural machine with three connected sections jointed in the driving direction, but the number is naturally variable within the framework of the attached claims.

The invention can be varied in a plurality of different ways within the framework of the attached claims, although the embodiments described above are to be preferred.

## Claims

1. Agricultural machine (1) with at least one implement (2, 3) for soil cultivation provided on a machine frame (5), one of said at least one implement being a roller cutter assembly (2) with two following in sequence rows of roller cutter segments (12) comprising mainly along their periphery arranged and evenly distributed knives (4), said rows mainly being arranged perpendicular to the travelling direction of the machine, wherein it further comprises said roller cutter segments (12) carrying suspension devices (13, 20) between said roller cutter segments and said machine frame (5), wherein the knives (4) in said two following in sequence rows of roller cutter segments (12) are fastened to at their lower end journaled in bearings, freely rotating holders (15) each having at the machine frame (5) connected arms (13), wherein the roller cutter segments (12) are assembled along two beams (6, 7) positioned at the frame, and each roller cutter segment (12) comprises an axle (19), which bears the holder (15) on the arm (13), **characterised in that** said axle (19) is inclined a pre-determined angle (a) between the longitudinal extension of the beams (6,7) and the axis of rotation of the roller cutter segments (12).

2. Agricultural machine (1) according to claim 1, **characterised in that** each roller cutter segment (12) comprising arm (13), holder (15) and knives (4) has a width that is shorter than the diameter of the roller cutter segment.

3. Agricultural machine (1) according to claim 1 or 2, **characterised in that** this angle can be adjustable approx. 5°-20°, preferably approx. 15°.

4. Agricultural machine (1) according to any one of claims 1-3, **characterised in that** the relative spacing of the holders (15) along the beams (6, 7) is 20-60 cm, preferably approx. 40 cm.

5. Agricultural machine (1) according to any one of claims 1-4, **characterised in that** said knives (4) are welded to the respective holder (15).

6. Agricultural machine (1) according to any one of claims 1-4, **characterised in that** said knives (4) are screwed or riveted to the respective holder (15).

7. Agricultural machine (1) according to any one of claims 1-6, **characterised in that** said arms (13) are assembled along said two parallel, in the frame (5) constituent beams (6, 7).

8. Agricultural machine (1) according to any one of claims 1-7, **characterised in that** said arms (13) are assembled on said beams (6, 7) via springing suspending apparatuses (20).

9. Agricultural machine (1) according to any one of claims 1-8, **characterised in that** said beams (6, 7) with the roller cutter segments (12) are arranged mainly after each other in the driving direction.

10. Agricultural machine (1) according to any one of claims 1-8, **characterised in that** said beams (6, 7) with the roller cutter segments (12) are arranged a pre-determined distance from each other in the driving direction.

## Patentansprüche

1. Landwirtschaftsmaschine (1) mit wenigstens einem Gerät (2, 3) zur Bodenbearbeitung, bereitgestellt an einem Maschinenrahmen (5), wobei eines des wenigstens einen Geräts eine Rollenschneideranordnung (2) mit zwei aufeinanderfolgenden Reihen von Rollenschneidersegmenten (12) ist, umfassend hauptsächlich entlang ihres Umfangs angeordnete und gleichmäßig verteilte Messer (4), wobei die Reihen hauptsächlich senkrecht zu der Fahrtrichtung der Maschine angeordnet sind, wobei sie ferner die Rollenschneidersegmente (12) umfasst, die Aufhängevorrichtungen (13, 20) zwischen den Rollenschneidersegmenten und dem Maschinenrahmen (5) tragen, wobei die Messer (4) in den zwei aufeinanderfolgenden Reihen von Rollenschneidersegmenten (12) befestigt sind an deren unterem Ende, gelagert in Lagern, wobei jedes der frei rotierenden Halter (15) an dem Maschinenrahmen (5) verbundene Arme (13) aufweist, wobei die Rollenschneidersegmente (12) entlang zweier Träger (6, 7) montiert sind, die an dem Rahmen positioniert sind, und jedes Rollenschneidersegment (12) eine Achse (19) umfasst, die den Halter (15) auf dem Arm (13) trägt, **gekennzeichnet dadurch, dass** die Achse (19) um einen vorbestimmten Winkel (a) geneigt ist zwischen der Längserstreckung der Träger (6, 7) und der Rotationsachse der Rollenschneidersegmente (12).

2. Landwirtschaftsmaschine (1) nach Anspruch 1, **gekennzeichnet dadurch, dass** jedes Rollenschneidersegment (12), umfassend Arm (13), Halter (15) und Messer (4), eine Breite aufweist, die kürzer als der Durchmesser des Rollenschneidersegments ist.

3. Landwirtschaftsmaschine (1) nach einem der Ansprüche 1 oder 2, **gekennzeichnet dadurch, dass** dieser Winkel einstellbar sein kann auf ungefähr 5°-20°, bevorzugt ungefähr 15°.

4. Landwirtschaftsmaschine (1) nach einem der Ansprüche 1-3, **gekennzeichnet dadurch, dass** der relative Abstand der Halter (15) entlang der Träger (6, 7) 20-60 cm, bevorzugt ungefähr 40 cm beträgt.

5. Landwirtschaftsmaschine (1) nach einem der Ansprüche 1-4, **gekennzeichnet dadurch, dass** die Messer (4) an den jeweiligen Halter (15) geschweißt sind.

6. Landwirtschaftsmaschine (1) nach einem der Ansprüche 1-4, **gekennzeichnet dadurch, dass** die Messer (4) an den jeweiligen Halter (15) geschraubt oder genietet sind.

7. Landwirtschaftsmaschine (1) nach einem der Ansprüche 1-6, **gekennzeichnet dadurch, dass** die Arme (13) entlang den zwei parallelen, in dem einen Rahmen (5) bildenden Träger (6, 7) montiert sind.

8. Landwirtschaftsmaschine (1) nach einem der Ansprüche 1-7, **gekennzeichnet dadurch, dass** die Arme (13) auf den Trägern (6, 7) mittels federnden Aufhängevorrichtungen (20) montiert sind.

9. Landwirtschaftsmaschine (1) nach einem der Ansprüche 1-8, **gekennzeichnet dadurch, dass** die Träger (6, 7) mit den Rollenschneidersegmenten (12) hauptsächlich hintereinander in der Fahrrichtung angeordnet sind.

10. Landwirtschaftsmaschine (1) nach einem der Ansprüche 1-8, **gekennzeichnet dadurch, dass** die Träger (6, 7) mit den Rollenschneidersegmenten (12) in einem vorbestimmten Abstand voneinander in der Fahrrichtung angeordnet sind.

## Revendications

1. Machine agricole (1) avec au moins un outil (2, 3) pour la culture du sol prévu sur un châssis de machine (5), l'un desdits au moins un outil étant un ensemble (2) de coupe à rouleaux avec deux rangées successives en séquence de segments de coupe en rouleau (12) comprenant, principalement le long de leur périphérie, des couteaux (4) agencés et répartis uniformément, lesdites rangées étant principalement agencées perpendiculairement à la direction de déplacement de la machine, la machine comprenant en outre le fait que lesdits segments de coupe en rouleau (12) portent des dispositifs de suspension (13, 20) entre lesdits segments de coupe en rouleau et ledit châssis de machine (5), les couteaux (4), dans les deux rangées successives en séquence de segments de coupe en rouleau (12), étant fixés, à leur extrémité inférieure tourillonnée dans des roulements, à des supports (15) tournant librement ayant chacun des bras (13) reliés au châssis de machine (5), les segments de coupe en rouleaux (12) étant assemblés le long de deux poutres (6, 7) positionnées sur le châssis, et chaque segment de coupe en rouleau (12) comprenant un essieu (19) qui porte le support (15) sur le bras (13), **caractérisée en ce que** ledit essieu (19) est incliné d'un angle prédéterminé (a) entre l'extension longitudinale des poutres (6,7) et l'axe de rotation des segments de coupe à rouleaux (12).

2. Machine agricole (1) selon la revendication 1, **caractérisée en ce que** chaque segment de coupe en rouleau (12) comprenant le bras (13), le support (15) et les couteaux (4) a une largeur qui est plus réduite que le diamètre du segment de coupe en rouleau.

3. Machine agricole (1) selon la revendication 1 ou la revendication 2, **caractérisée en ce que** cet angle est apte à être réglé d'env. 5° à 20°, de préférence d'env. 15°.

4. Machine agricole (1) selon l'une quelconque des revendications 1 à 3, **caractérisée en ce que** l'espacement relatif des supports (15) le long des poutres (6, 7) est de 20 à 60 cm, de préférence d'env. 40 cm.

5. Machine agricole (1) selon l'une quelconque des revendications 1 à 4, **caractérisée en ce que** lesdits couteaux (4) sont soudés au support respectif (15).

6. Machine agricole (1) selon l'une quelconque des revendications 1 à 4, **caractérisée en ce que** lesdits couteaux (4) sont vissés ou rivetés sur le support respectif (15).

7. Machine agricole (1) selon l'une quelconque des revendications 1 à 6, **caractérisée en ce que** lesdits bras (13) sont assemblés le long desdites deux poutres constitutives (6, 7) parallèles, dans le châssis (5).

8. Machine agricole (1) selon l'une quelconque des revendications 1 à 7, **caractérisée en ce que** lesdits bras (13) sont assemblés sur lesdites poutres (6, 7) via des appareils (20) de suspension à ressort.

9. Machine agricole (1) selon l'une quelconque des revendications 1 à 8, **caractérisée en ce que** lesdites poutres (6, 7) avec les segments de coupe à rouleaux (12) sont agencées principalement l'une après l'autre dans le sens de marche.

10. Machine agricole (1) selon l'une quelconque des revendications 1 à 8, **caractérisée en ce que** lesdites poutres (6, 7), avec les segments de coupe à rouleaux (12), sont agencées à une distance prédéterminée les unes des autres dans le sens de marche.
